# EUROPÄISCHE PATENTSCHRIFT

(11) **EP 1 899 624 B1**
(45) Veröffentlichungstag und Bekanntmachung des Hinweises auf die Patenterteilung: **01.10.2008**
(21) Anmeldenummer: 06762210.0
(22) Anmeldetag: 27.06.2006
(51) Int. Cl.: F16H 3/54, F16H 57/08, F16H 57/04

(54) **AUTOMATGETRIEBE**
AUTOMATIC GEARBOX
BOITE DE VITESSES AUTOMATIQUE

(30) Priorität: 04.07.2005 DE 102005031066
(43) Veröffentlichungstag der Anmeldung: 19.03.2008
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); ZIEMER, Peter, 88069 Tettnang (DE); BREHMER, Martin, 78467 Konstanz (DE)
(86) Internationale Anmeldenummer: PCT/EP2006/006191
(87) Internationale Veröffentlichungsnummer: WO 2007/003306

(56) Entgegenhaltungen:
- DE-A1- 10 323 254
- FR-A- 2 535 809
- US-A- 3 834 498
- US-A- 4 719 818
- US-A- 5 846 153
- PATENT ABSTRACTS OF JAPAN Bd. 1997, Nr. 07, 31. Juli 1997 (1997-07-31) -& JP 09 068262 A (JATCO CORP), 11. März 1997 (1997-03-11)

## Beschreibung

Die Erfindung betrifft ein Automatgetriebe mit wenigstens einer Planetenradstufe und wenigstens einem Getriebeschaltglied, bei dem dieses Getriebeschaltglied axial unmittelbar benachbart zu der Planetenradstufe angeordnet und eine Kolben-Zylinder-Anordnung zur Betätigung des Getriebeschaltgliedes vorhanden ist. Die JP-A-09 068 262 offenbart ein Automatgetriebe mit allen Merkmalen des Oberbegriffes des unabhängigen Anspruchs 1.

Sofern bei einem solchen Getriebe die Planetenradstufe aus technischen Gründen so im Getriebegehäuse angeordnet ist, dass die Druckmittelzufuhr zu dem Druckraum der Kolben-Zylinder-Anordnung nicht von der planetensatzfernen Seite derselben erfolgen kann, ergibt sich das technische Problem, wie diese Druckmittelzufuhr konkret realisiert werden kann.

Die Lösung dieser Aufgabe ist durch die Merkmale des Hauptanspruchs definiert, während vorteilhafte Ausgestaltungen und Weiterbildungen der Erfindung den Unteransprüchen entnehmbar sind.

Der Erfindung liegt die Erkenntnis zugrunde, dass eine Druckmittelversorgung des Druckraumes des Getriebeschaltgliedes auch von dem axialen Ende des Getriebegehäuses her erfolgen kann, wenn das Druckmittel durch die Planetenradstufe geführt wird.

Demnach ist die der Erfindung zugrunde liegende Aufgabe konstruktiv gelöst durch ein Automatgetriebe mit wenigstens einer Planetenradstufe und wenigstens einem Getriebeschaltglied, bei dem dieses Getriebeschaltglied axial unmittelbar benachbart zu der Planetenradstufe angeordnet ist, bei dem eine Kolben-Zylinder-Anordnung zur Betätigung des Getriebeschaltgliedes vorhanden ist, bei dem die Planetenradstufe ein Hohlrad, ein Sonnenrad und einen Planetenträger aufweist, wobei an letzterem Planetenräder drehbar gelagert angeordnet sind, bei dem der Planetenträger mit einer Getriebewelle drehfest verbunden ist, und bei dem das Druckmittel dem Druckraum des Zylinders der Kolben-Zylinder-Anordnung durch eine Bohrung in der Getriebewelle und eine Bohrung im Planetenträger zuleitbar ist.

Die erwähnte drehfeste Verbindung zwischen der Getriebewelle und dem Planetenträger ist bevorzugt eine Schweißverbindung. Jedoch ist es auch möglich, eine derartige Getriebewelle mit integriertem Planetenträger aus einem Werkstück einstückig herauszuarbeiten.

Erfindungsgemäß ist vorgesehen, dass die Bohrung zur Druckmittelversorgung des Druckraumes im Planetenträger radial und axial schräg über ein der Getriebewelle zugeordnetes Axiallager geführt ist. Durch diese Maßnahme kann einerseits der Abstand zu der Krafteinleitfläche des Axiallagers an der Stirnseite der Getriebewelle vergleichsweise groß gehalten werden, und andererseits eine vergleichsweise kurze, den Planetenträger durchdringende Ölzuführbohrung bis dicht an den Druckraum der Kolben-Zylinder-Anordnung herangeführt werden.

Gemäß einer beispielhaften Bauform des Automatgetriebes ist die Planetenradstufe am abtriebsseitigen Ende des Getriebegehäuses angeordnet und die Getriebewelle, über die das Druckmittel zugeführt wird, als Getriebeabtriebswelle ausgebildet, so dass die vorgeschlagenen baulichen Maßnahmen besonders wirkungsvoll zur Realisierung eines solchen Getriebes beitragen.

Gemäß einem anderen Merkmal dieses Automatgetriebes kann vorgesehen sein, dass ein Innenlamellenträger des Getriebeschaltgliedes mit dem Sonnenrad der Planetenradstufe in Antriebsverbindung steht. In diesem Zusammenhang sei erwähnt, dass es sich bei dem Getriebeschaltglied um eine Getriebekupplung oder um eine Getriebebremse handeln kann.

Zudem ist bei einem Automatgetriebe gemäß der Erfindung bevorzugt vorgesehen, dass die Planetenräder mit dem Sonnenrad kämmen, mit dem Hohlrad im Zahneingriff stehen und auf jeweils einen Planetenbolzen am Planetenträger drehbar gelagert sind. Diese Planetenbolzen sind in zugehörige Aufnahmeöffnungen im Planetenträger eingesteckt.

Des Weiteren ist vorgesehen, dass ein Außenlamellenträger des Getriebeschaltgliedes unter axialen Abstand zu dem Planetenrädern mit dem Planetenträger drehfest verbunden ist. Durch diesen Aufbau wird die freie Drehbarkeit der Planetenräder sichergestellt und eine Drehmomentübertragung zwischen dem Außenlamellenträger und dem Planetenträger ermöglicht.

Gemäß eines weiteren Merkmals der Erfindung ist vorgesehen, dass der Außenlamellenträger des Getriebeschaltgliedes eine Führungsscheibe aufweist oder mit einer solchen kraftschlüssig verbunden ist, mittels der dieser mit den jeweiligen Planetenbolzen drehmomentübertragend in Verbindung steht. Vorzugsweise sind die Planetenbolzen durch diesbezügliche Bohrungen in der Führungsscheibe nur so weit durchgesteckt, dass die Stirnseiten der Planetenbolzen und die Stirnseite der Führungsscheibe flächenbündig sind.

Zur Druckmittelversorgung des Druckraumes der Kolben-Zylinder-Anordnung ist mit Vorteil vorgesehen, dass in der Führungsscheibe eine axiale Bohrung ausgebildet ist, die mit einem Ende mit der schrägen Bohrung im Planetenträger strömungstechnisch in Verbindung steht, und mit dem anderen Ende in eine Öldurchtrittsöffnung in dem Zylinder der Kolben-Zylinder-Anordnung des Getriebeschaltgliedes mündet. Durch diesen Aufbau ist ein Druckmittelversorgungspfad von einer Druckmittelbohrung in der Getriebewelle über den Planetenträger, die Führungsscheibe und den genannten Zylinder realisiert.

Um einen Druckmittelverlust entlang dieses Druckmiftelversorgungspfades zu vermeiden, sieht ein weiteres Merkmal der Erfindung vor, dass in die Bohrung der Führungsscheibe ein Dichtelement eingesetzt ist, welches ein Austreten von Druckmittel bzw. Öl zwischen den aufeinander liegenden Flächen von Zylinder und Führungsscheibe sowie Führungsscheibe und Planetenträger verhindert.

Vorzugsweise ist dieses Dichtelement an dem Zylinder der Kolben-Zylinder-Anordnung anvulkanisiert, so dass der Montageaufwand bei der Herstellung eines solchen Getriebes gegenüber einer Einzelteilvariante vorteilhaft reduziert ist.

Aus dem gleichen Grunde ist bevorzugt vorgesehen, dass an dem Zylinder ein weiteres Dichtmittel anvulkanisiert ist, welches zur Abdichtung des Druckraumes des Getriebeschaltgliedes gegen einen im Zylinder axial verschiebbar angeordneten Kolben dient, der beim Anlegen eines Betätigungsdrucks im Druckraum axial gegen ein Lamellenpaket des Getriebeschaltgliedes pressbar ist. Dieses Dichtmittel ist vorzugsweise am radial äußeren Ende des Zylinders angebracht. Durch diese bauliche Maßnahme wird auch erreicht, dass der Druckraum der Kolben-Zylinder-Anordnung in demjenigen Bereich radial gut abgedichtet ist, in dem der Kolben der Kolben-Zylinder-Anordnung den Zylinder radial und axial übergreift.

Gemäß einem anderen Merkmal eines solchen Automatgetriebes kann vorgesehen sein, dass der Zylinder der Kolben-Zylinder-Anordnung mit der Führungsscheibe zur axialen Lagesicherung der Planetenbolzen verbunden ist, oder an dieser axial gesichert anliegt. Sofern eine mechanische Verbindung vorgesehen ist, kann diese durch eine Vernietung, eine Verstemmung oder durch eine Verschweißung realisiert sein.

Wenn auf eine derartige mechanische Verbindung verzichtet werden soll, so kann alternativ dazu vorgesehen sein, dass der Zylinder der Kolben-Zylinder-Anordnung an der Führungsscheibe anliegt, durch den Druck in dem Druckraum gegen die Planetenbolzen gedrückt wird und die Planetenbolzen an ihrem anderen axialen Ende durch einen Sicherungsring axial am Planetenträger gesichert sind, wobei dieser Sicherungsring demnach am druckraumfernen Ende der jeweiligen Planetenbolzen angeordnet ist.

Gemäß einer anderen Weiterbildung der Erfindung ist vorgesehen, dass in der Getriebewelle bzw. in dem Planetenträger zu den Planetenbolzen führende Bohrungen vorhanden sind, die ebenfalls schräg über das der Getriebewelle zugeordnete Axiallager geführt sind. Durch diese Konstruktion ist die Schmierung der Planetenräder sichergestellt, wobei einerseits vergleichsweise kurze radial schräge Bohrungen in der Getriebewelle möglich sind, und andererseits ein ausreichend großer axialer Abstand zu der Krafteinleitfläche des Axiallager an der Stirnseite der Getriebeausgangsvrielle eingehalten wird. Alternativ hierzu kann die Ölversorgung der Planetenräder über einen Spalt zwischen dem Zylinder der Kolben-Zylinder-Anordnung und der Führungsscheibe erfolgen, wobei der Bereich radial außerhalb des Planetenbolzens dicht bzw. nahezu dicht ausgebildet sein muß.

In diesem Zusammenhang ist es auch von Vorteil, wenn die zu dem Druckraum des Getriebeschaltgliedes führende Bohrung für das Druckmittel und die Bohrungen für das Schmiermittel zu den. Planetenbolzen im Bereich des planetenstufenseitigen Endes der Getriebewelle axial gesehen zwischen dem der Getriebewelle zugeordneten Axiallager und einem Radialnadellager an der Getriebeabtriebswelle in unterschiedliche Ölzuführbohrungen münden, die in dieser Getriebeabtriebswelle ausgebildet sind.

Schließlich wird es als vorteilhaft beurteilt, wenn der Zylinders der Kolben-Zylinder-Anordnung axial so lang ausgebildet ist, dass dieser mit einem druckraumfernen Abschnitt zusammen mit einem druckraumfernen axialen Fortsatz am Kolben einen Druckausgleichsraum umschließt, in den das Schmier- bzw. Druckmittel zum Fliehkraftausgleich der in dem Druckraum auf das Druckmittel wirkenden Fliehkräfte temporär eingeschlossen werden kann.

Die Erfindung lässt sich anhand eines konkreten Ausführungsbeispiels weiter erläutern, wozu auch auf die beigefügte Zeichnungsfigur verwiesen wird.

In dieser Figur ist ein schematischer Querschnitt durch einen abtriebsseitigen Teil eines gattungsgemäßen Automatgetriebes 1 dargestellt, bei dem im Bereich des abtriebsseitigen Endes 15 des Getriebegehäuses 32 eine Planetenradstufe 2 sowie axial entfernter zu diesem Ende 15 ein als Getriebekupplung ausgebildetes Getriebeschaltglied 3 angeordnet ist.

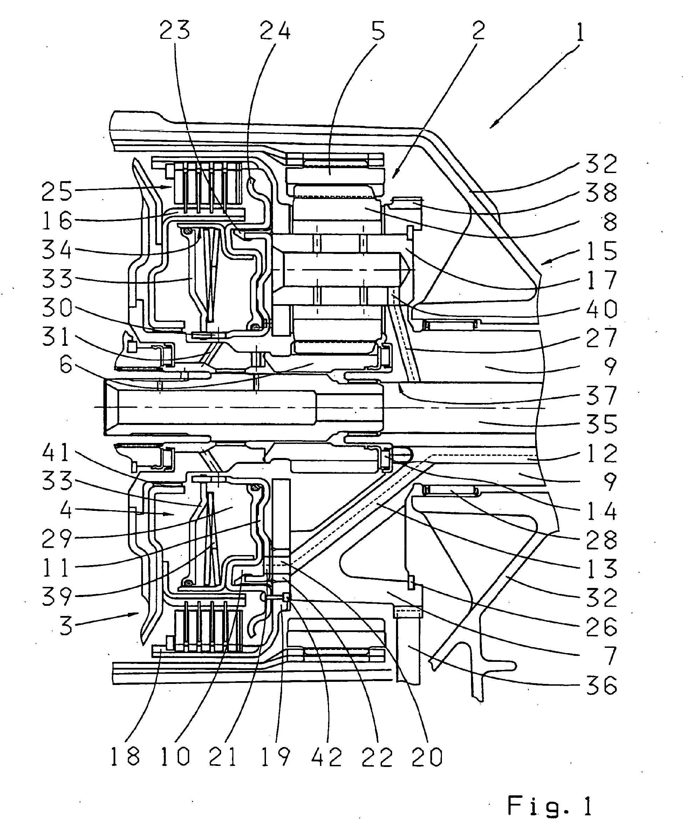

Die Planetenradstufe 2 umfasst ein Hohlrad 5, ein Sonnenrad 6, einen Planetenträger 7 und Planetenräder 8, von denen eines in der oberen Hälfte der Zeichnung dargestellt ist. Diese Planetenräder 8 kämmen mit dem Hohlrad 5 und dem Sonnenrad 6, während der Planetenträger 7 drehfest mit einer Getriebewelle 9 verbunden ist. Das Sonnenrad 6 ist im dargestellten Beispiel als Sonnenwelle ausgebildet und mit weiteren - in der Figur nicht näher dargestellten - Getriebebauteilen verbunden. Die Planetenräder 8 sind jeweils mittels Planetenbolzen 17 am Planetenträger 7 befestigt und auf diesen drehbar gelagert. Ein Sicherungsring 26 radial Unterhalb einer Außenverzahnung 38 des Planetenträgers 7 sichert die Planetenbolzen 17 axial in Richtung zu dem abtriebsseitigen axialen Ende 15 des Getriebegehäuses 32. Die Außenverzahnung 38 des Planetenträgers 7 ist mit einem nur angedeuteten Zahnrad 36 im Zahneingriff.

Die Getriebewelle 9 ist im Bereich 37 ihres planetenstufennahen Endes axiale an einem Axiallager 14 gelagert, dessen Wälzkörper sich axial an der zugewandten Stirnseite des Sonnenrades 6 abstützen. Zudem ist die Getriebewelle 9 in diesem Bereich 37 mittels eines Radialnadellagers 28 am Getriebegehäuse 32 gelagert.

Das Getriebeschaltglied 3 ist hier als Lamellenkupplung mit einem Lamellenpaket 25, einem Innenlamellenträger 16 und einem Außenlamellenträger 18 ausgebildet. Der Innenlamellenträger 16 steht mit dem Sonnenrad 6 in Antriebsverbindung, wozu diese beiden Bauteile 6 und 16 über eine Verzahnung 41 miteinander verbunden sind. Der Außenlamellenträger 18 ist drehfest mit einer so genannten Führungsscheibe 19 verbunden (obere Zeichnungshälfte) oder mit dieser einstückig ausgebildet (untere Zeichnungshälfte).

Zur Betätigung dieses Getriebeschaltgliedes 3 dient eine Kolben-Zylinder-Anordnung 4, die einen Zylinder 11, einen in dem Zylinder 11 axial bewegbaren Kolben 24 und eine Tellerfeder 39 umfasst, wobei sich letztere an einem von dem Druckraum 10 der Kolben-Zylinder-Anordnung 4 fernen Fortsatz 34 des Kolbens 24 und an einem druckraumfernen Abschnitt 33 des Zylinders 11 abstützt. Dieser genannte druckraumfeme Abschnitt 33 kann auch als "Stauscheibe" bezeichnet werden.

Die Kolben-Zylinder-Anordnung 4 ist in an sich bekannter Weise so aufgebaut und angeordnet, dass bei einer Druckbeaufschlagung des Druckraumes 10 mit einem Druckmittel der Kolben 24 soweit in Richtung zu dem Lamellenpaket 25 der Kupplung 3 bewegt wird, dass diese geschlossen wird. Bei einer Reduzierung des Druckmitteldrucks sorgt die Tellerfeder 39 für eine Rückstellung des Kolbens 24, so dass die Kupplung 3 geöffnet wird.

Der Zylinder 11 und der Kolben 24 bilden in einem vom Druckraum 10 und der Planetenradstufe 2 abgewandeten Bereich mittels der genannten druckraumfernen Bauteile 33 und 34 einen Druckausgleichsraum 29, der über zumindest eine Ölzuführöffnung 30 an der radial inneren Seite des Zylinders 11 mit Öl aus dem Getriebegehäuse befüllbar ist. Zudem ist dieser Ölzuführöffnung 30 eine Bohrung 31 im Sonnenrad 6 zugeordnet, durch die ebenfalls Öl zugeführt werden kann. Dieses Öl wird im Druckausgleichsraum 29 in an sich bekannter Weise für einen Druckausgleich hinsichtlich der fliehkraftbedingt auf das Öl im Druckraum 10 wirkenden Kräfte genutzt.

Der Zylinder 11 der Kolben-Zylinder-Anordnung 4 verfügt über ein anvulkanisiertes Dichtelement 23, welches an dessen radialem Ende dort ausgebildet ist, wo der Kolben 24 den Zylinder 11 radial und axial umgreift. Durch diesen Aufbau kann einerseits der radiale Endabschnitt des Kolbens 24 das Lamellenpaket 25 betätigungswirksam erreichen, andererseits ist durch das Dichtmittel 23 der Druckraum 10 der Kolben-Zylinder-Anordnung 11 gegen den Innenraum des Getriebegehäuses 32 abgedichtet.

Die zur Druckbeaufschlagung durch den Kolben 24 notwendige axiale Stellbewegung desselben wird durch eine Befüllung des Druckraumes 10 mit einem Druckmittel, dem Getriebeöl, erreicht. Da die Druckmittelversorgung des Druckraumes 10 aus technischen Gründen nicht von der planetenstufenfernen Seite des Getriebeschaltgliedes 3 (in der Zeichnung von links) erfolgen kann, ist bei diesem Automatgetriebe 1 in der Getriebewelle 9 eine axiale Bohrung 12 vorhanden, die nahe der Planetenradstufe 2 in eine schräg verlaufende Bohrung 13 in dem Planetenträger 7 mündet.

Diese Bohrung 13 im Planetenträger 7 endet an der Führungsscheibe 19, in der an dieser Stelle eine axiale Bohrung 20 ausgebildet ist. An der anderen Seite der Führungsscheibe 19 mündet deren Bohrung 20 in eine axiale Öldurchtrittsöffnung 21 in dem Zylinder 11 der Kolben-Zylinder-Anordnung 4, so dass das Druckmittel in den Druckraum 10 gelangen kann.

Zur Abdichtung der aufeinander liegenden Flächen von Zylinder 11 und Führungsscheibe 19 sowie Führungsscheibe 19 und Planetenträger 7 ist in die Bohrung 20 der Führungsscheibe 19 eine zylindrische Dichtung 22 eingesetzt, die zur Reduzierung des Montageaufwandes an dem Blechbauteil des Zylinders 11 anvulkanisiert ist.

Zur axialen Sicherung des Zylinders 11 und der Planetenbolzen 17 kann vorgesehen sein, dass der Zylinder 11 und die Führungsscheibe 19 miteinander verbunden sind. Dies kann beispielsweise durch Vernieten (Niet 42), Verschweißen oder Verstemmen erfolgen.

Wie der einzigen Figur weiter entnehmbar ist, weist die Getriebewelle 9 eine Axialbohrung 35 auf, durch die Schmiermittel für die Planetenräder 8 heranführbar ist. Zudem ist in der Getriebewelle 9 wenigstens eine weitere schräge Bohrung 27 vorhanden, welche mit der axialen Schmiermittelbohrung 35 sowie mit radialen Schmiermittelbohrungen 40 in den Planetenbolzen 17 in Strömungsverbindung steht. Von dort gelangt das Schmiermittel Öl über jeweils eine zentrale Bohrung und weitere radiale Bohrungen in den Planetenbolzen 17 zu den Lagerflächen der jeweiligen Planetenräder 8.

Die Abbildung verdeutlicht, dass sowohl die schräge Bohrung 13 zur Druckmittelversorgung für den Druckraum 10 der Kolben-Zylinder-Anordnung 4 als auch die wenigstens eine schräge Schmiermittelbohrung 27 derartig im Bereich 37 des planetenstufennahen Endes der Getriebewelle 9 bzw. des Planetenträgers 7 angeordnet sind, dass diese ziemlich genau zwischen dem der Getriebewelle 9 zugeordneten Axiallager 14 und dem Radialnadellager 28 in die zugeordneten Bohrungen 12 bzw. 35 münden. Durch die schräge Ausbildung dieser Bohrungen 13 bzw. 27 wird ein Optimum zwischen kurzen Strömungswegen und ausreichenden Abständen zwischen den durch die Lager 14 und 28 belasteten Stellen der Getriebewelle 9 erreicht.

### Bezugszeichen

- 1: Automatgetriebe
- 2: Planetenradstufe
- 3: Getriebeschaltglied, Kupplung
- 4: Kolben-Zylinder-Anordnung
- 5: Hohlrad
- 6: Sonnenrad, Sonnenwelle
- 7: Planetenträger
- 8: Planetenrad
- 9: Getriebewelle
- 10: Druckraum
- 11: Zylinder der Kolben-Zylinder-Anordnung
- 12: Bohrung zum Druckraum in der Getriebewelle
- 13: Bohrung zum Druckraum in dem Planetenträger
- 14: Axiallager
- 15: abtriebsseitiges Ende des Automatgetriebes
- 16: Innenlamellenträger
- 17: Planetenbolzen
- 18: Außenlamellenträger
- 19: Führungsscheibe
- 20: Bohrung in der Führungsscheibe
- 21: Oldurchtrittsöffnung in dem Zylinder
- 22: Dichtelement in Öffnung 20
- 23: Dichtelement zur Kolbenabdichtung
- 24: Kolben der Kolben-Zylinder-Anordnung
- 25: Lamellenpaket
- 26: Sicherungsring am Planetenbolzen
- 27: Bohrung im Planetenträger zur Schmierung am Planetenbolzen
- 28: Radialnadellager
- 29: Druckausgleichsraum
- 30: Ölzuführöffnung im Zylinder zum Druckausgleichsraum
- 31: Bohrung in dem Sonnenrad
- 32: Getriebegehäuse
- 33: druckraumferner Abschnitt des Zylinders, Stauscheibe
- 34: druckraumferner Fortsatz des Kolbens
- 35: Ölzuführbohrung in der Getriebewelle zur Schmierung der Planetenbolzen
- 36: Zahnrad
- 37: Bereich des planetenstufennahen Endes der Getriebewelle
- 38: Außenverzahnung am Planetenträger
- 39: Tellerfeder
- 40: Schmiermittelbohrung im Planetenbolzen
- 41: Verzahnung
- 42: Niet

## Patentansprüche

1. Automatgetriebe (1) mit wenigstens einer Planetenradstufe (2) und wenigstens einem Getriebeschaltglied (3), bei dem dieses Getriebeschaltglied (3) axial unmittelbar benachbart zu der Planetenradstufe (2) angeordnet ist, bei dem eine Kolben-Zylinder-Anordnung (4) zur Betätigung des Getriebeschaltgliedes (3) vorhanden ist, bei dem die Planetenradstufe (2) ein Hohlrad (5), ein Sonnenrad (6) und einen Planetenträger (7) aufweist, an dem Planetenräder (8) drehbar gelagert angeordnet sind, bei dem der Planetenträger (7) mit einer Getriebewelle (9) drehfest verbunden ist, und bei dem das Druckmittel dem Druckraum (10) des Zylinders (11) der Kolben-Zylinder-Anordnung (4) durch eine Bohrung (12) in der Getriebewelle (9) und eine Bohrung (13) im Planetenträger (7) zuleitbar ist, **dadurch gekennzeichnet, dass** die Bohrung (13) zur Druckmittelversorgung des Druckraumes (10) im Planetenträger (7) radial und axial schräg über ein der Getriebewelle (9) zugeordnetes Axiallager (14) geführt ist.

2. Automatgetriebe nach Anspruch 1, **dadurch gekennzeichnet, dass** die Planetenradstufe (2) am abtriebsseitigen Ende (15) des Automatgetriebes (1) angeordnet ist.

3. Automatgetriebe nach Anspruch 1 oder 2, **dadurch gekennzeichnet, dass** ein Innenlamellenträger (16) des Getriebeschaltgliedes (3) mit dem Sonnenrad (6) der Planetenradstufe (2) in Antriebsverbindung steht.

4. Automatgetriebe nach wenigstens einem der vorherigen Ansprüche, **dadurch gekennzeichnet, dass** die Planetenräder (8) mit dem Sonnenrad (6) kämmen, mit dem Hohlrad (5) im Zahneingriff stehen und mittels jeweils eines Planetenbolzens (17) am Planetenträger (7) drehbar gelagert sind.

5. Automatgetriebe nach wenigstens einem der vorherigen Ansprüche, **dadurch gekennzeichnet, dass** ein Außenlamellenträger (18) des Getriebeschaltgliedes (3) unter axialen Abstand zu dem Planetenrädern (8) mit dem Planetenträger (7) drehfest verbunden ist.

6. Automatgetriebe nach Anspruch 5, **dadurch gekennzeichnet, dass** der Außenlamellenträger (18) des Getriebeschaltgliedes (3) eine Führungsscheibe (19) ausweist oder mit einer solchen verbunden ist, mittels der dieser mit den jeweiligen Planetenbolzen (17) drehmomentübertragend verbunden ist.

7. Automatgetriebe nach Anspruch 6, **dadurch gekennzeichnet, dass** in der Führungsscheibe (19) eine axiale Bohrung (20) ausgebildet ist, die mit einem Ende mit der schrägen Bohrung (13) im Planetenträger (7) strömungstechnisch in Verbindung steht, und mit dem anderen Ende in eine Öldurchtrittsöffnung (21) in dem Zylinder (11) der Kolben-Zylinder-Anordnung (4) mündet.

8. Automatgetriebe nach Anspruch 7, **dadurch gekennzeichnet, dass** in die Bohrung (20) der Führungsscheibe (19) ein Dichtelement (22) eingesetzt ist, welches ein Austreten von Druckmittel zwischen den aufeinander liegenden Flächen von Zylinder (11) und Führungsscheibe (19) sowie Führungsscheibe (19) und Planetenträger (7) verhindert.

9. Automatgetriebe nach Anspruch 8, **dadurch gekennzeichnet, dass** das Dichtelement (22) an dem Zylinder (11) anvulkanisiert ist.

10. Automatgetriebe nach wenigstens einem der Ansprüche 1 bis 9, **dadurch gekennzeichnet, dass** an dem Zylinder (11) ein weiteres Dichtmittel (23) anvulkanisiert ist, welches zur Abdichtung des Druckraumes (10) der Kolben-Zylinder-Anordnung (4) gegen einen im Zylinder (11) axial verschiebbar angeordneten Kolben (24) dient, welcher beim Anlegen eines Betätigungsdrucks im Druckraum (10) gegen ein Lamellenpaket (25) des Getriebeschaltgliedes (3) pressbar ist.

11. Automatgetriebe nach wenigstens einem der Ansprüche 6 bis 9, **dadurch gekennzeichnet, dass** der Zylinder (11) mit der Führungsscheibe (19) zur axialen Lagesicherung der Planetenbolzen (17) verbunden ist oder an dieser axial gesichert anliegt.

12. Automatgetriebe nach Anspruch 11, **dadurch gekennzeichnet, dass** der Zylinder (11) mit der Führungsscheibe (19) vernietet, verstemmt oder verschweißt ist

13. Automatgetriebe nach Anspruch 11, **dadurch gekennzeichnet, dass** der Zylinder (11) an der Führungsscheibe (19) anliegt und die Planetenbolzen (17) durch einen Sicherungsring (26) axial am Planetenträger (7) gesichert sind, wobei der Sicherungsring (26) am druckraumfernen Ende der jeweiligen Planetenbolzen (17) angeordnet ist.

14. Automatgetriebe nach wenigstens einem der vorherigen Ansprüche, **dadurch gekennzeichnet, dass** in der Getriebewelle (9) bzw. in dem Planetenträger (7) zu den Planetenbolzen (17) führende Bohrungen (27) vorhanden sind, die schräg über das der Getriebewelle (9) zugeordnete Axiallager (14) geführt sind.

15. Automatgetriebe nach Anspruch 14, **dadurch gekennzeichnet, dass** die Bohrung (13) zu dem Druckraum (10) des Getriebeschaltgliedes (3) und die Bohrungen (27) zu den Planetenbolzen (17) im Bereich des planetenstufenseitigen Endes (37) der Getriebewelle (9) axial gesehen zwischen dem der Getriebewelle (9) zugeordneten Axiallager (14) und einem Radialnadellager (28) an der Getriebewelle (9) in Ölzuführbohrungen (12 bzw. 35) münden, die in der Getriebewelle (9) ausgebildet sind.

16. Automatgetriebe nach wenigstens einem der vorherigen Ansprüche, **dadurch gekennzeichnet, dass** der Zylinder (11) der Kolben-Zylinder-Anordnung (4) axial so lang ausgebildet ist, dass dieser mit seinem druckraumfernen Abschnitt (33) zusammen mit einem druckraumfernen axialen Fortsatz (34) am Kolben (24) einen Druckausgleichsraum (29) umschließt.

## Claims

1. Automatic transmission (1) with at least one planetary gear stage (2) and at least one gearshift component (3), with this gearshift component (3) being arranged axially immediately adjacent to the planetary gear stage (2), with a piston-cylinder arrangement (4) being provided for control of the gearshift component (3), with the planetary gear stage (2) featuring a ring gear (5), a center gear (6) and a planet carrier (7), with bearing-supported planet gears (8) arranged on it, with the planet carrier (7) being nonrotationally connected to a transmission shaft (9), and with the pressure medium being feedable to the pressure chamber (10) of the cylinder (11) of the piston-cylinder arrangement (4) through a passage (12) in the transmission shaft (9) and a passage (13) in the planet carrier (7), **characterized in that** the passage (13) for pressure medium supply of the pressure chamber (10) is arranged in the planet carrier (7) radially and axially diagonally via an axial bearing (14) assigned to the transmission shaft (9).

2. Automatic transmission according to claim 1, **characterized in that** the plantary gear stage (2) is arranged on the output end (15) of the automatic transmission (1).

3. Automatic transmission according to claim 1 or 2, **characterized in that** an internal disk carrier (16) of the gearshift component (3) is drivingly connected to the center gear (6) of the planetary gear stage (2).

4. Automatic transmission according to at least one of the preceding claims, **characterized in that** the planet gears (8) mesh with the center gear (6) and the ring gear (5) and are bearing-supported on the planet carrier (7) by a planetary bolt (17) each.

5. Automatic transmission according to at least one of the preceding claims, **characterized in that** the outer disk carrier (18) of the gearshift component (3) is nonrotationally connected to the planet carrier (7), with an axial distance to the planet gears (8).

6. Automatic transmission according to claim 5, **characterized in that** the outer disk carrier (18) of the gearshift component (3) features a guide (19), or is connected to such a guide, through which it establishes a torque-transmitting connection with the respective planetary bolts (17).

7. Automatic transmission according to claim 6, **characterized in that** the guide (19) features an axial passage (20), one end of which, in terms of fluid technics, is connected to the diagonal passage (13) in the planet carrier (7), and the other end of which leads into an oil passage (21) in the cylinder (11) of the piston-cylinder arrangement (4).

8. Automatic transmission according to claim 7, **characterized in that** the passage (20) of the guide (19) features a sealing element (22) preventing the pressure medium from escaping between the adjacent surfaces of cylinder (11) and guide (19) and guide (19) and planet carrier (7).

9. Automatic transmission according to claim 8, **characterized in that** the sealing element (22) on the cylinder (11) is scorched.

10. Automatic transmission according to at least one of the claims 1 thru 9, **characterized in that** the cylinder (11) features another scorched sealing element (23) sealing the pressure chamber (10) of the piston-cylinder arrangement (4) from a piston (24), which is axially displaceably arranged in the cylinder (11) and by means of a control pressure in the pressure chamber (10) can be pressed against a disk set (25) of the gearshift component (3).

11. Automatic transmission according to at least one of the claims 6 thru 9, **characterized in that** the cylinder (11) is connected to the guide (19) to secure axial positioning of the planetary bolts (17), or is secured axially adjacent to it.

12. Automatic transmission according to claim 11, **characterized in that** the cylinder (11) is riveted, calked, or welded to the guide (19).

13. Automatic transmission according to claim 11, **characterized in that** the cylinder (11) is adjacent to the guide (19) and that the planetary bolts (17) are axially secured to the planet carrier (7) by a locking ring (26), with the locking ring (26) being arranged on the pressure-chamber-distant end of the respective planetary bolts (17).

14. Automatic transmission according to at least one of the preceding claims, **characterized in that** the transmission shaft (9) and the planet carrier (7) feature passages (27) leading to the planetary bolts (17) and routed diagonally via the axial bearing (14) assigned to the transmission shaft (9).

15. Automatic transmission according to claim 14, **characterized in that** the passage (3) to the pressure chamber (10) of the gearshift component (3) and the passages (27) to the planetary bolts (17) lead into oil feed bores (12 or 35) in the transmission shaft in the area of the planetary-stage end (37) of the transmission shaft (9), axially seen between the axial bearing (14) assigned to the transmission shaft (9) and a radial needle bearing (28).

16. Automatic transmission according to at least one of the preceding claims, **characterized in that** the cylinder (11) of the cylinder-piston arrangement (4) extends axially far enough so that its pressure-chamber-distant section (33), together with a pressure-chamber-distant axial extension (34) on the piston (24), embraces a pressure compensation chamber (29).

## Revendications

1. Transmission automatique (1) dotée d'au moins un étage épicycloïdal (2) et d'au moins un élément de changement de rapport de la boîte de vitesses (3), dans laquelle cet élément de changement de rapport de la boîte de vitesses (3) est disposé dans le sens axial et immédiatement juxtaposé à l'étage épicycloïdal (2), dans laquelle est présent un arrangement piston-cylindre (4) pour l'actionnement de l'élément de changement de rapport de la boîte de vitesses (3), dans laquelle l'étage épicycloïdal (2) comporte une couronne (5), un planétaire (6) et un arbre porte-satellites (7), sur lequel sont logés en rotation des satellites (8), dans laquelle l'arbre porte-satellites (7) est lié solidaire en rotation à un arbre de la boîte de vitesses (9), et dans laquelle le fluide de pression peut être amené à la chambre de pression (10) du cylindre (11) de l'arrangement piston-cylindre (4) par un alésage (12) dans l'arbre de la boîte de vitesses (9) et un alésage (13) dans l'arbre porte-satellites (7), **caractérisée en ce que** l'alésage (13) pour l'alimentation de la chambre de pression (10) en fluide de pression dans l'arbre porte-satellites (7) est guidé radialement et axialement et de façon diagonale par un roulement axial (14) associé à l'arbre de la boîte de vitesses (9).

2. Transmission automatique selon la revendication 1, **caractérisée en ce que** l'étage épicycloïdal (2) est disposé sur l'extrémité côté sortie (15) de la transmission automatique (1).

3. Transmission automatique selon la revendication 1 ou 2, **caractérisée en ce que** un porte-disques intérieur (16) de l'élément de changement de rapport de la boîte de vitesses (3) est relié par entraînement au planétaire (6) de l'étage épicycloïdal (2).

4. Transmission automatique selon au moins une des revendications précédentes, **caractérisée en ce que** les satellites (8) engrènent avec le planétaire (6) et engrènent avec la couronne (5), et **en ce qu'**ils sont logés en rotation sur l'arbre porte-satellites (7) à l'aide de respectivement un axe de satellite (17).

5. Transmission automatique selon au moins une des revendications précédentes, **caractérisée en ce que** un porte-disques extérieur (18) de l'élément de changement de rapport de la boîte de vitesses (3) est lié solidaire en rotation à l'arbre porte-satellites (7) et est axialement espacé par rapport aux satellites (8).

6. Transmission automatique selon la revendication 5, **caractérisée en ce que** le porte-disques extérieur (18) de l'élément de changement de rapport de la boîte de vitesses (3) comporte un disque de guidage (19) ou **en ce qu'**il est lié à tel disque de guidage, à l'aide duquel le porte-disques extérieur est lié avec transmission de couple aux axes de satellites (17) correspondants.

7. Transmission automatique selon la revendication 6, **caractérisée en ce que** dans le disque de guidage (19) est réalisé un alésage axial (20), cet alésage étant lié par une extrémité à l'alésage (13) oblique dans l'arbre porte-satellites (7) et étant en communication fluidique avec celui-ci, et **en ce qu'**il débouche avec l'autre extrémité dans un orifice de passage d'huile (21) dans le cylindre (11) de l'arrangement piston-cylindre (4).

8. Transmission automatique selon la revendication 7, **caractérisée en ce que** dans l'alésage (20) du disque de guidage (19) est monté un élément d'étanchéité (22), celui-ci empêchant la sortie de fluide de pression entre les surfaces superposées du cylindre (11) et du disque de guidage (19) ainsi que du disque de guidage (19) et de l'arbre porte-satellites (7).

9. Transmission automatique selon la revendication 8, **caractérisée en ce que** l'élément d'étanchéité (22) sur le cylindre (11) est vulcanisé.

10. Transmission automatique selon au moins une des revendications 1 à 9, **caractérisée en ce que** sur le cylindre (11) est vulcanisé un autre moyen d'étanchéité (23), celui-ci servant à garantir l'étanchéité de la chambre de pression (10) de l'arrangement piston-cylindre (4) contre un piston (24) disposé dans le cylindre (11) de façon axialement déplaçable, ce piston pouvant être pressé, en cas d'application d'une pression d'actionnement dans la chambre de pression (10), contre un ensemble de disques (25) de l'élément de changement de rapport de la boîte de vitesses (3)

11. Transmission automatique selon au moins une des revendications 6 à 9, **caractérisée en ce que** le cylindre (11) est lié au disque de guidage (19) pour la fixation axiale de la position des axes de satellites (17) ou **en ce qu'**il appuie axialement bloqué sur ce disque de guidage.

12. Transmission automatique selon la revendication 11, **caractérisée en ce que** le cylindre (11) est riveté, maté ou soudé au disque de guidage (19).

13. Transmission automatique selon la revendication 11, **caractérisée en ce que** le cylindre (11) appuie sur le disque de guidage (19) et **en ce que** les axes de satellites (17) sont fixés à l'aide d'un circlip (26) axialement sur l'arbre porte-satellites (7), sachant que le circlip (26) est disposé à l'extrémité éloignée de la chambre de pression des axes de satellites (17) correspondants.

14. Transmission automatique selon au moins une des revendications précédentes, **caractérisée en ce que** dans l'arbre de la boîte de vitesses (9) ou dans l'arbre porte-satellites (7) sont présents des alésages (27) menant aux axes de satellites (17), ces alésages étant guidés de façon diagonale par le roulement axial (14) associé à l'arbre de la boîte de vitesses (9).

15. Transmission automatique selon la revendication 14, **caractérisée en ce que** l'alésage (3) vers la chambre de pression (10) de l'élément de changement de rapport de la boîte de vitesses (3) et les alésages (27) vers les axes de satellites (17) débouchent - dans la zone de l'extrémité du côté de l'étage épicycloïdal (37) de l'arbre de la boîte de vitesses (9) et vu axialement entre le roulement axial (14) dirigé vers l'arbre de la boîte de vitesses (9) et un roulement à aiguilles radial (28) au niveau de l'arbre de la boîte de vitesses (9) - dans des alésages d'amenée d'huile (12 ou 35), ces alésages étant réalisés dans l'arbre de la boîte de vitesses (9).

16. Transmission automatique selon au moins une des revendications précédentes, **caractérisée en ce que** la longueur axiale du cylindre (11) de l'arrangement piston-cylindre (4) est telle que celui-ci enferme avec sa section éloignée de la chambre de pression (33) et ensemble avec un prolongement axial éloigné de la chambre de pression (34) au niveau du piston (24) une chambre de compensation de la pression (29).
